Europäisches Patentamt

European Patent Office

Office européen des brevets

(19)

(11) Veröffentlichungsnummer: **0 357 911 B1**

(12) **EUROPÄISCHE PATENTSCHRIFT**

(45) Veröffentlichungstag der Patentschrift: **16.12.92**

(51) Int. Cl.5: **C01B 13/11**

(21) Anmeldenummer: **89112913.2**

(22) Anmeldetag: **14.07.89**

---

(54) **Ozonerzeuger.**

---

(30) Priorität: **09.09.88 CH 3383/88**

(43) Veröffentlichungstag der Anmeldung:
**14.03.90 Patentblatt 90/11**

(45) Bekanntmachung des Hinweises auf die
Patenterteilung:
**16.12.92 Patentblatt 92/51**

(84) Benannte Vertragsstaaten:
**CH DE ES FR GB IT LI**

(56) Entgegenhaltungen:
**DE-A- 3 521 985**

**CHEMICAL ABSTRACTS, Band 105, Nr. 4, 28.
Juli 1986, Seite 141, Zusammenfassung Nr.
26585f, Columbus, Ohio, US; PL-A-127 982**

(73) Patentinhaber: **Ozonia AG
Stettbachstrasse 1
CH-8600 Dübendorf(CH)**

(72) Erfinder: **Mechtersheimer, Günter, Dr.
Oberdorfstrasse 25
CH-5415 Nussbaumen(CH)**

(74) Vertreter: **Hetzer, Hans Jürgen et al
ABB Management AG TEI-
Immaterialgüterrecht Wiesenstrasse 26
CH-5401 Baden(CH)**

## Beschreibung

Die Erfindung bezieht sich auf einen Ozonerzeuger mit einer Aussenelektrode und einer Mehrzahl Innenelektroden, die auf ihren äusseren Oberflächen eine dielektrische Schicht aufweisen, mit Entladungsspalten zwischen Aussenelektrode und dielektrischer Schicht und einer an die äusseren und inneren Elektroden angeschlossenen Wechselspannungsquelle.

Ozonisatoren dieser Gattung sind beispielsweise aus der CH-PS 648 534 bekannt.

Technologischer Hintergrund und Stand der Technik

Die zunehmende Verwendung von Ozon für chemische und physikalische Zwecke hat dazu geführt, dass die auf Arbeiten von Siemens zurückgehende Ozonröhre in der jüngsten Vergangenheit in technischer und wirtschaftlicher Hinsicht entscheidend verbessert worden ist. So wird in der US-PS 28 11 217 vorgeschlagen, die Ozonausbeute dadurch zu erhöhen, dass bestimmte Kenngrössen des Ozonisators (Frequenz der Speisespannung, Dielektrizitätskonstante des dielektrischen Materials, Amplitude der Speisespannung, Dicke der Dielektrikumsschicht und Grösse des Entladungsspaltes) bestimmte Gesetzmässigkeiten erfüllen müssen.

In anderen Publikationen werden zum gleichen Zweck spezielle Kühlmassnahmen vorgeschlagen, um die Ozonausbeute zu erhöhen, so z.B. neben der Flüssigkeitskühlung der Aussenelektrode die Innenkühlung der Hochspannungselektrode mit Gas oder Flüssigkeit in der DE-OS 23 57 392, oder die Zwischenkühlung des mit Ozon angereicherten Einsatzgases bei hintereinandergeschalteten Ozonisatoren in der DE-OS 24 36 914.

Es ist allgemein bekannt, dass durch eine Reduktion der Entladungsspaltweite in einem Röhrenozonerzeuger die mittlere Temperatur im Entladungsspalt heruntergesetzt werden kann. Theoretisch und experimentell kann gezeigt werden, dass die mittlere Temperatur im Entladungsspalt proportional zu dessen Spaltweite ist. Eine niedrige Temperatur im Entladungsspalt ist erwünscht, weil dadurch der Wirkungsgrad der Ozonerzeugung markant gesteigert werden kann.

Stand der Technik sind heute Entladungsspaltweiten um 1 mm. Eine weitere Reduktion der Spaltweite stösst an die geometrischen Toleranzen der verwendeten Metall- und Dielektrikumsrohre. Insbesondere bei grösseren Rohrlängen ist eine weitere Reduktion der Spaltweite limitiert durch die immer vorhandenen Durchbiegungen der Dielektrikums- und Metallrohre.

Zwecks Erhöhung und Vergleichmässigung der Intensitäten der Feldstärke wird in der DE-OS 34 22 989 vorgeschlagen, die Innenelektrode als massiven metallischen Stab auszubilden. Wegen dessen im Vergleich zu einem Rohr kleinen Durchmesser ist die Feldstärke an seiner Oberfläche gross. Da auch der Durchmesser der Aussenelektrode entsprechend verringert wird und die dünne Materialstärken eingesetzt werden, ergibt sich eine elastische Konstruktion. Der Abstand zwischen Aussen- und Innenelektrode sowie Dielektrikum kann über die gesamte Länge sehr genau eingehalten werden. Hierdurch ergeben sich eine gleichmässige Intensität der Feldstärke, gute Kühlmöglichkeiten, kompakte Bauweise und hohe Leistung.

Darstellung der Erfindung

Ausgehend vom stand der Technik liegt der Erfindung die Aufgabe zugrunde, einen Ozonerzeuger zu schaffen, der sich durch kompakten Aufbau, hohen Wirkungsgrad und hohe Ozonkonzentration auszeichnet.

Zur Lösung dieser Aufgabe bei einem Ozonerzeuger der eingangs genannten Gattung ist erfindungsgemäss vorgesehen, dass die Aussenelektroden im wesentlichen als paarig angeordnete, voneinander beabstandete Metallplatten ausgebildet sind, zwischen denen ein Rohr oder eine Lage dicht aneinanderliegender Rohre mit einem dem Abstand der Metallplatten entsprechenden Durchmesser liegen, wobei die Rohre eine äussere Schicht aus dielektrischem Material und je eine Innenelektrode aus einem elektrisch leitenden Material aufweisen.

Gemäss einer ersten Ausführungsform ist die Innenelektrode eine Metallschicht auf der Innenwandung eines einseitig geschlossenen Rohres aus dielektrischem Material. z.B. Glasrohr mit kreisrunden Querschnitt, wodurch sich ein Ozonerzeuger ergibt, der sich bezüglich der Geometrie des Entladungsspaltes vollständig von den klassischen Ozonerzeugern unterscheidet: Die Entladungsräume sind nunmehr in Rohrlängsrichtung verlaufende Kanäle, die von je zwei benachbarten Rohraussenwänden und der Metallplatte begrenzt sind, also sichelförmigen Querschnitt aufweisen.
Wider Erwarten ist der Ozonerzeugungswirkungsgrad trotz inhomogenem Entladungsspalt sehr gross, weil die im Spalt durch die Entladungen entstehende Wärme zum einen grösstenteils über die Metallplatten und zum anderen über das Dielektrikum (Glas) zu den Metallplatten abgeführt wird.

Bei einer zweiten Ausführungsfrom sind statt Metallschichten in den offenen Dielektrikumsrohren separate Innenelektroden vorgesehen, die entweder als Drahtwendeln oder als abgeflachte Metallstäbe mit beispielsweise linsenförmigem Querschnitt ausgebildet sind. Bei letzteren verlaufen die Flachseiten der Elektroden parallel zu den Aussenelektroden.

Bei jeder dieser beiden Varianten können die freien Räume zwischen den Elektroden und den Dielektrikumsrohren mit einem geeigneten Dielektrikum ausgefüllt sein, oder es sind direkt vergossenen Innenelektroden, z.B. mit Kunststoff-Dielektrikum oder isolierte Drähte vorgesehen..

Eine weitere Verbesserung des Wärmeüberganges aus dem bzw. den Entladungsspalt(en) lässt sich durch Einschieben von Metall-oder Dielektrikumsstäben in die Entladungsräume zwischen den Aussenelektroden und den Dielektrikumsrohren erzielen. Auch kann die Aussenelektrode eine derartige Form aufweisen, z.B. derart, dass die besagten Metallstäbe mit den Aussenelektroden einstükkig ausgebildet sind.

Neben Rohren mit kreisrundem Querschnitt ist auch eine Ausführungsform möglich mit Dielektrikumsrohren mit polygonalem Querschnitt, wobei diese Rohre dann zweckmässig aus Keramik oder einem Kunstoff-Dielektrikum bestehen und entweder eine innere Metallisierung oder eine separate Hochspannungselektrode (Wendel, abgeflachte Metallplatte) aufweisen.

Kurze Beschreibung der Zeichnungen

In der Zeichnung sind Ausführungsbeispiele der Erfindung schematisch dargestellt; darin zeigt

Fig. 1    ein erstes Ausführungsbeispiel eines Ozonerzeugers mit innenmetallisierten Glasrohren;

Fig. 2    ein zweites Ausführungsbeispiel eines Ozonerzeugers mit innenmetallisierten Keramikrohren mit polygonalem Querschnitt;

Fig. 3    ein drittes Ausführungsbeispiel eines Ozonerzeugers mitGlasrohren und separaten Metallelektroden in Form abgeflachter Stäbe;

Fig. 4    eine Abwandlung von Fig.3 mit inneren Entladungsspalten, die mit einem Dielektrikum ausgefüllt sind;

Fig. 5    ein viertes Ausführungsbeispiel eines Ozonerzeugers mit separaten Innenelektroden in Form von Drahtwendeln im Querschnitt;

Fig. 6    einen Längsschnitt durch den Ozonerzeuger nach Fig.5;

Fig. 7    eine Abwandlung des Ozonerzeugers nach Fig.1 mit Vierkantrohren als Aussenelektroden;

Fig. 8    eine weitere Abwandlung des Ozonerzeugers nach Fig.1 mit plattenförmigen Aussenelektroden und dazwischenliegenden Distanzstücken;

Fig. 9    eine weitere Abwandlung des Ozonerzeugers nach Fig.1 mit plattenförmigen Aussenelektroden mit in den Entladungsraum weisenden Vorsprüngen;

Fig.10    eine weitere Abwandlung des Ozonerzeugers nach Fig.1 mit plattenformigen Aussenelektroden und isolierten Hochspannungsdrähten als Innenelektrode, wobei die Drtahtisolation das Dielektrikum bildet.

Detaillierte Beschreibung der Erfindung

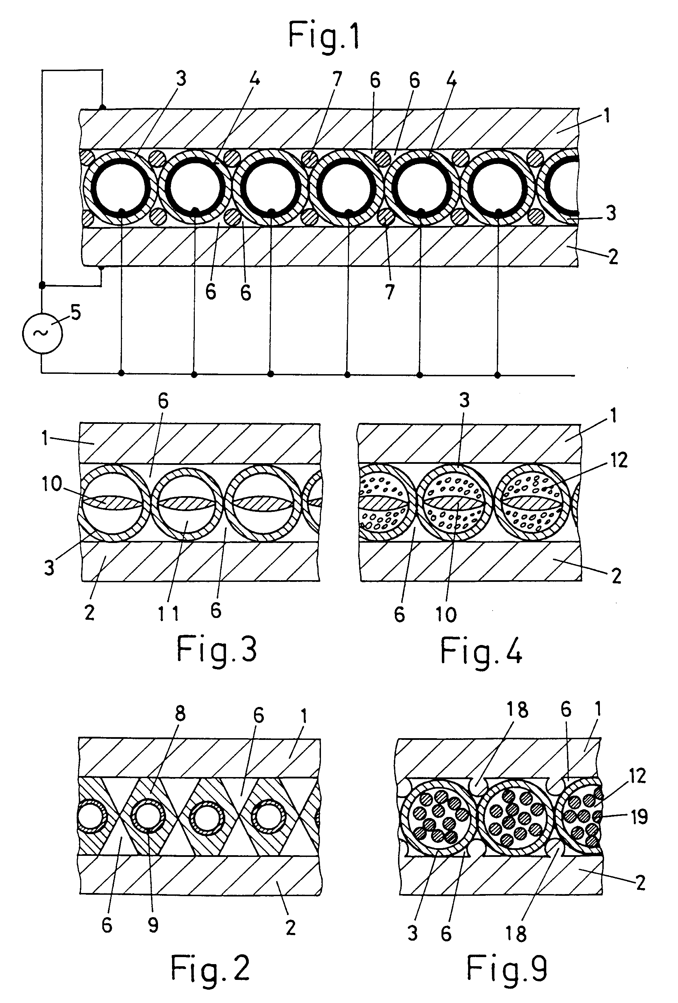

Der Ozonerzeuger nach Fig.1 umfasst zwei distanzierte Metallplatten 1,2, welche die Aussenelektroden bilden. Zwischen den Metallplatten 1,2 liegt dicht an dicht eine Lage Glasrohre 3, deren Aussendurchmesser dem Abstand der Metallplatten 1,2 entspricht. Die Glasrohre weisen kreisrunden Querschnitt auf und sind an der Innenwandung mit einer Metallschicht 4 versehen. Diese bildet die Innenelektrode. Der Aussendurchmesser der Glasrohre 3 liegt typisch zwischen 3 und 15 mm, die Wandstärke beträgt typisch 1 mm.Eine Wechselstromquelle mit einstellbarer Ausgangsspannung (typisch einige kV bis 20 kV) und Frequenz (50 Hz bis 10 kHz) ist mit dem einen Pol an beide Aussenelektroden 1,2 und mit dem anderen Pol an alle Innenelektroden 4 angeschlossen.

Die Kontaktierung mit den Innenelektroden erfolgt üblicherweise über (nicht dargestellte) Kontaktbürsten bekannter Bauart. Die stille elektrische Entladung bildet sich in den durch die Glasrohre 3 und die Metallplatten 1 bzw. 2 begrenzten Räumen 6 aus.

Die Kühlung des Ozonerzeugers erfolgt primär durch eine Kühlflüssigkeit, welche an den Aussenflächen der Metallflächen entlangströmt. Um den ohnehin schon guten Wärmeübergang vom Entladungsraum zu den Metallplatten 1,2 zu verbessern, sind in die Entladungsspalte 6 Stäbe 7 aus Metall, Glas oder einem sonstigen dielektrischen Material eingelegt. Diese sollen die Glasrohre 3 als auch die Metallplatten 1, 2 möglichst linienförmig berühren.

Eine weitere Intensivierung der Kühlung kann durch ein Gas oder eine elektrisch nichtleitende Flüssigkeit erfolgen, welche durch die Glasrohre 3 hindurchgeleitet wird. Derartige Massnahmen sind zum Stand der Technik zu zählen und bedürfen daher im Rahmen dieser Anmeldung keiner weiteren Erläuterung.

Anstelle von Glasrohren mit kreisrundem Querschnitt können auch Dielektrikumsrohre aus anderen Materialien, z.B. Keramikrohre, verwendet werden. Fig.2 zeigt eine solche Variante mit Keramikrohren 8 mit sechseckigem Querschnitt. Derartige Rohre lassen sich mit Mitteln des Standes der Technik, z.B. im Extrusionsverfahren, mit der notwendigen Formgenauigkeit herstellen. Die Keramikrohre 8 weisen an der Innenwandung je eine Metallisierung 9 auf. Entsprechend dem Ausführungsbeispiel nach Fig.1 können auch hier Stäbe (nicht eingezeichnet) zur Verbesserung des Wärmeübergangs in die Entladungsräume 6 eingeschoben sein. Die Kühlung erfolgt in der selben Weise wie bei der Anordnung nach Fig.1.

Anstelle von innenmetallisierten Rohren gemäss Fig.1 und 2 können auch Dielektrikumsrohre mit separaten Innenelektroden verwendet werden. Ein erstes Ausführungsbeispiel einer derartigen Anordnung ist in Fig.3 veranschaulicht. In die Glasrohre 3 sind abgeflachte Metallelektroden 10 mit linsenförmigem Querschnitt eingesetzt, deren Breitseiten parallel zu den Metallelektroden 1,2 verlaufen und deren grösster Durchmesser dem Innendurchmesser der Glasrohre 3 entspricht. Bei dieser Ausführungsform bilden sich innere Entladungsräume 11 und äussere Entladungsräume 6, die elektrisch in Serie liegen.

Will man auf diese zusätzlichen Entladungsräume verzichten, so kann der freie Raum zwischen der Metallelektrode 10 und dem Glasrohr 3 mit einem dielektrischen Füllmittel 12 ausgefüllt werden ,wie es in Fig.4 veranschaulicht ist.

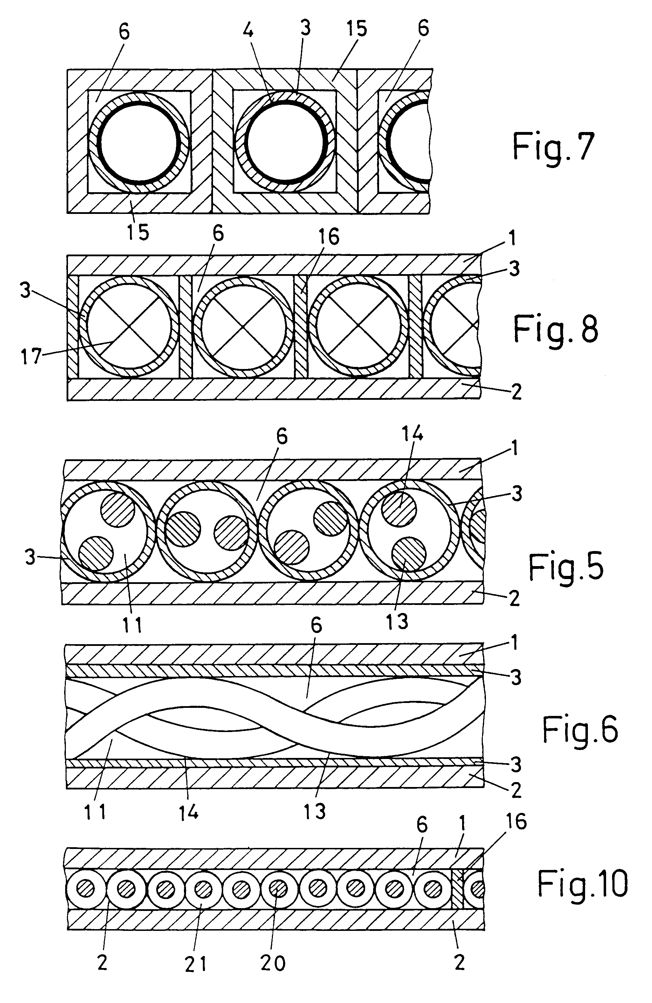

Anstelle von abgeflachten Elektroden ist die Innenelektrode jedoch vorzugsweise als ein- oder mehrgängige Drahtwendel 13,14 bzw. Drahtspirale mit nur einem eingezogenen Draht0 ausgeführt, wie es in den Figuren 5 und 6 dargestellt ist. Diese werden vorgespannt in die Glas- oder Dielektrikumsrohre 3 eingezogen und liegen punkt- oder linienförmig an der Rohrinnenwand an. Diese Ausführungsform erlaubt die Verwendung von Dielektrikumsrohren sehr kleiner Durchmesser und dementsprechend kleiner Wandstärke. So wurden versuchsweise Glasrohre mit 4 mm Aussendurchmesser und einer Wandstärke von etwa 1 mm erfolgreich getestet. Auch hier ist ein innerer und ein äusserer Entladungsraum vorhanden, wobei ersterer in Analogie zu Fig.4 mit einem dielektrischen Füllmittel ausgefüllt werden kann (nicht in Fig.5 bzw. 6 eingezeichnet).

Ohne Füllmittel bewirkt die vorzugsweise mehrgängige Drahtwendel eine intensive Vermischung und bessere Kühlung des durch das Rohrinnere strömenden Gases.

Wie in Fig.7 veranschaulicht ist, lässt sich das erfindungsgemässe Konzept bis in die kleinste Einheit modularisieren. Dort ist jeweils ein mit einer Innenmetallisierung 4 versehenes Glasrohr 3 in ein Metallrohr 15 eingeschoben, wobei die Metallrohre 15 dicht gepackt sind und als Aussenelektrode dienen.

Anstelle von Metallrohren mit quadratischem Querschnitt können auch solche mit Rechteckquerschnitt verwendet werden, welche in der einen Dimension die lichte Weite eines Dielektrikumsrohres, in der anderen Dimension ein ganzzahliges Vielfaches des Rohraussendurchmessers aufweisen. Auch lassen sich wabenartige Konfigurationen gemäss Fig.8 anwenden, wo jeweils zwischen im Beispielsfall einem Dielektrikumsrohr 3 und dem benachbarten ein dünner Steg 16 liegt. In diesem Fall ist eine separate Innenelektrode in Form eines vierschenkligen Profilstabes 17 vorgesehen, der bei Weglassen der Innenmetallisierung 4 bei Fig.7 auch bei jener verwendet werden kann.

In allen in den Figuren 3 bis 8 dargestellten Ausführungsbeispielen kann selbstverständlich analog zu Fig.1 in den äusseren Entladungsraum 6 ein Stab aus Metall oder einem dielektrischem Material eingeschoben sein, um die Wärmeabfuhr zu verbessern.

Anstelle von separaten Stäben können auch einstückig mit den Aussenelektroden 1,2 ausgeführte Vorsprünge 18 vorgesehen sein, welche in die Entladungsräume 6 hineinragen und die Glasoder Dielektrikumsrohre 3 möglichst linienförmig berühren, wie es in Fig. 9 beispielhaft dargestellt ist. In dieser Figur ist ferner veranschaulicht, dass die Innenelktrode auch als Drahtbündel 19, bestehend aus einer Vielzahl von Einzeldrähten 19, ausgeführt sein kann, wobei der verbleibende Raum im Innern des Rohres 3 mit einem dielektrischen Füllmittel 12 analog Fig. 4 ausgefüllt sein kann.

Anstelle eines glatten Stabes können in den äusseren Entladungsraum 6 auch Mittel zur periodischen Verengung des Strömungsquerschnitts, z.B. durch Einführen einer "Perlenkette" mit Abständen zwischen den "Perlen" von einigen Zentimetern, vorgesehen sein, wobei die "Perlen" aus einem beliebigen, jedoch ozonfesten Material bestehen.

Fig.10 zeigt schliesslich eine Variante der Erfindung, die sich durch extrem einfachen und wirtschaftlichen Aufbau auszeichnet. Zwischen zwei Metallplatten 1, 2, welche als Aussenelektroden dienen und durch Distanzstücke 16 beabstandet sind, sind Hochspannungsdrähte, bestehend aus einer metallischen Seele 20 und einer Isoierhülle 21, eingeschoben. Die Drahtseele 20 dient als Innenelektrode, während die Isolierhülle 21 als dielektrisches Rohr dient. Die Entladungsräume 6 liegen jeweils zwischen den möglichst dicht an dicht liegenden Hochspannungsdrähten und den Metallplatten 1 bzw. 2.

**Patentansprüche**

1.  Ozonerzeuger mit einer Aussenelektrode (1,2) und einer Mehrzahl Innenelektroden (4;9;10;13,14;17), die auf ihren äusseren Oberflächen eine dielektrische Schicht (3;8) aufweisen, mit Entladungsspalten (6) zwischen Aussenelektrode und dielektrischer Schicht und einer an die äusseren und inneren Elektroden angeschlossenen Wechselspannungsquelle(5), dadurch gekennzeichnet, dass die Aussenelektroden (1,2;15) im wesentlichen als paarig angeordnete, voneinander beabstandete Metallplatten (1,2) ausgebildet sind, zwischen denen ein Rohr (3;8) oder eine Lage dicht aneinanderliegender Rohre mit einem dem Abstand der Metallplatten (1,2) entsprechenden Durchmesser liegen, wobei die Rohre eine äussere Schicht (3;8) aus dielektrischem Material aufweisen oder aus einem solchen bestehen und je eine Innenelektrode (4;9;10;13,14;17) aus einem elektrisch leitendem Material aufweisen.

2. Ozonerzeuger nach Anspruch 1, dadurch gekennzeichnet, dass die Rohre aus Glas, Keramik oder einem Kunststoff-Dielektrikum bestehen und mit einer Innenmetallisierung (4;9) oder einem den Rohrquerschnitt ausfüllenden metallischen Leiter (20) als Innenelektrode versehen sind.

3. Ozonerzeuger nach Anspruch 1, dadurch gekennzeichnet, dass die Rohre aus Glas oder Keramik bestehen und eine separate metallische Innenelektrode (10;13,14;17;19) aufweisen.

4. Ozonerzeuger nach Anspruch 3, dadurch gekennzeichnet, dass die Innenelektrode als flacher Stab (10) ausgebildet ist, dessen Breitseite annähernd parallel zu den metallischen Platten (1,2) verläuft.

5. Ozonerzeuger nach Anspruch 3, dadurch gekennzeichnet, dass die Innenelektrode als ein- oder mehrgängige Drahtwendel (13,14) oder als Drahtspirale ausgebildet ist.

6. Ozonerzeuger nach Anspruch 2, dadurch gekennzeichnet, dass das Keramik- oder Kunststoff-Dielektrikumsrohr (8) einen polygonalen Querschnitt aufweist und zumindest mit einer Fläche auf der Aussenelektrode (1,2) aufliegt.

7. Ozonerzeuger nach einem der Ansprüche 1 bis 6, dadurch gekennzeichnet, dass in den Entladungsraum (6) zwischen dem Rohr (4;8) und der Aussenelektrode (1,2) ein Stab (7) eingelegt ist, welcher Stab die Aussenelektrode und/oder die Rohre (4;8) zumindest teilweise punkt- oder linienförmig berührt, oder die Aussenelektrode (1,2) in den Entladungsraum (6) ragende Vorsprünge (18) aufweist.

8. Ozonerzeuger nach einem der Ansprüche 1 bis 6, dadurch gekennzeichnet, dass in den Entladungsraum (6) zwischen dem Rohr (4;8) und der Aussenelektrode (1,2) Mittel zur periodischen Verengung des Strömungsquerschnittes eingelegt sind.

9. Ozonerzeuger nach einem der Ansprüche 3, 4, 5, 7 oder 8, dadurch gekennzeichnet, dass bei separater Innenelektrode der Raum zwischen dieser und dem sie umgehenben Dielektrikumsrohr mit einem dielektrischen Füllmittel (12) ausgefüllt ist.

10. Ozonerzeuger nach einem der Ansprüche 1 bis 9, dadurch gekennzeichnet, dass die Metallplatten (1,2) durch Distanzstege (16) beabstandet und gleichzeitig miteinander verbunden sind.

**Claims**

1. Ozone generator comprising an outer electrode (1,2) and a plurality of inner electrodes (4;9;10;13,14;17) which have a dielectric coating (3;8) on their outer surfaces, discharge gaps (6) between the outer electrode and the dielectric coating, and an alternating current source (5) connected to the outer and inner electrodes, characterised in that the outer electrodes (1,2;15) are formed essentially as metal plates (1,2) arranged and separated from one another in pairs, between which a tube (3;8) Or a layer of closely-spaced tubes with a diameter corresponding to the separation of the metal plates (1,2) lies, the tubes having an outer coating (3;8) of dielectric material, or consisting of such, and having in each case an inner electrode (4;9;10;13,14;17) of an electrically conductive material.

2. Ozone generator as according to Claim 1, characterised in that the tubes consist of glass, ceramics or a plastic dielectric, and are provided as inner electrode with an inner metallic coating (4;9) or with a metallic conductor (20) which fills up the tube cross-section.

3. Ozone generator according to Claim 1, characterised in that the tubes consist of glass or ceramics, and have a separate metallic inner electrode (10;13;14;17;19).

4. Ozone generator according to Claim 3, characterised in that the inner electrode is formed as a flat rod (10) the broad face of which runs approximately parallel to the metal plates (1,2).

5. Ozone generator according to Claim 3, characterised in that the inner electrode is formed as a single-turn or multiple-turn wire helix (13,14) or as a wire spiral.

6. Ozone generator according to Claim 2, characterised in that the ceramic tube or plastic-dielectric tube (8) has a polygonal cross-section, and rests on the outer-electrode (1,2) with at least one face.

7. Ozone generator according to one of Claims 1 to 6, characterised in that a rod (7) is inserted into the discharge space (6) between the tube (4;8) and the outer electrode (1,2), which rod touches the outer electrode and/or the tubes (4;8) at least partially in a punctiform or linear fashion, or the outer electrode (1,2) has projections (18) projecting into the discharge space (6).

8. Ozone generator according to one of Claims 1 to 6, characterised in that means for the periodic constriction of the flow cross-section are inserted in the discharge space (6) between the tube (4;8) and the outer electrode (1,2).

9. Ozone generator according to one of Claims 3, 4, 5, 7 or 8, characterised in that with a separate inner electrode the space between the latter and the dielectric tube surrounding it is filled up with a dielectric filler (12).

10. Ozone generator according to one of Claims 1 to 9, characterised in that the metal plates (1,2) are separated by distance webs (16), and are simultaneously joined to one another.

**Revendications**

1. Ozoniseur ayant une électrode externe (1,2) et une pluralité d'électrodes internes (4;9;10;13;14;17), qui comportent sur leurs surfaces externes une couche diélectrique (3;8), des entrefers de décharge (6) entre électrode externe et couche diélectrique, et une source d'alimentation en courant alternatif (5) à laquelle les électrodes externes et internes sont reliées, caractérisé en ce que les électrodes externes (1,2;15) sont formées essentiellement de plaques métalliques disposées en paire à une certaine distance les unes des autres, entre lesquelles est disposé(e) un tube (3;8) ou une couche de tubes extrêmement rapprochés les uns des autres d'un diamètre correspondant à la distance entre les plaques métalliques (1,2), les tubes comportant ou étant faits d'une couche externe (3;8) en matériau diélectrique et comportant chacun une électrode interne (4;9;10;13;14;17) en matériau électriquement conducteur.

2. Ozoniseur selon la revendication 1, caractérisé en ce que les tubes sont faits de verre, de céramique ou de diélectrique plastique et sont pourvus en tant qu'électrode interne, d'une métallisation interne (4;9) ou d'un conducteur métallique (20) qui remplit la section interne du tube.

3. Ozoniseur selon la revendication 1, caractérisé en ce que les tubes sont en verre ou en céramique et sont pourvus d'une électrode interne séparée (10;13;14;17;19).

4. Ozoniseur selon la revendication 3, caractérisé en ce que l'électrode interne se compose d'une tige plate (10), dont la face la plus large s'étend approximativement parallèlement aux plaques métalliques (1,2).

5. Ozoniseur selon la revendication 3, caractérisé en ce que l'électrode interne se compose d'une hélice (13, 14) ou d'une spirale de fils à un ou plusieurs pas.

6. Ozoniseur selon la revendication 2, caractérisé en ce que le tube à diélectrique céramique ou plastique (8) possède une section polygonale et repose au moins avec l'une de ses surfaces contre l'électrode externe (1,2).

7. Ozoniseur selon l'une des revendications 1 à 6, caractérisé en ce qu'on place dans la zone de décharge (6) une tige (7) entre le tube (4;8) et l'électrode externe (1,2), laquelle tige est en contact ponctuel ou sous forme de ligne avec l'électrode externe (1,2) et/ou le tube (4;8), ou en ce que l'électrode externe (1,2) possède des protubérances (18) qui font saillie dans la zone de décharge (6).

8. Ozoniseur selon l'une des revendications 1 à 6, caractérisé en ce qu'on place dans la zone de décharge entre le tube (4;8) et l'électrode externe (1,2) des moyens servant à un rétrécissement périodique de la section d'écoulement.

9. Ozoniseur selon l'une des revendications 3, 4, 5, 7, ou 8, caractérisé en ce qu'en cas d'électrode interne séparée, l'espace entre celle-ci et le tube à diélectrique qui l'entoure est rempli d'un agent de remplissage diélectrique (12).

10. Ozoniseur selon l'une des revendications 1 à 9, caractérisé en ce que les plaques métalliques (1,2) sont maintenues séparées par des pièces d'écartement (16) et sont simultanément reliées entre elles.

# Fig.1

## Fig.3

## Fig.4

## Fig.2

## Fig.9

Fig.7

Fig.8

Fig.5

Fig.6

Fig.10